# EUROPEAN PATENT SPECIFICATION

(11) **EP 0 964 153 B1**
(45) Date of publication and mention of the grant of the patent: **08.10.2003**
(21) Application number: 99304410.6
(22) Date of filing: 07.06.1999
(51) Int. Cl.: F02M 63/02, F02M 59/46, F02M 55/02, F16K 17/02, F02M 53/02

(54) **Control and safety valve arrangement in a fuel feeding system**
Steuer- und Sicherheitsventil für Brennstoffversorgungssystem
Dispositif d'une soupape de sécurité et de régulation dans un système d'alimentation en carburant

(30) Priority: 08.06.1998 FI 981306
(43) Date of publication of application: 15.12.1999
(60) Divisional application: 02024058.6
(73) Proprietor: Wärtsilä Technology Oy AB, 00530 Helsinki (FI)
(72) Inventor: Lehtonen, Kai, 65280 Vaasa (FI)
(74) Representative: Newby, Martin John

(56) References cited:
- US-A- 5 537 980
- US-A- 5 626 121

## Description

This invention relates to a control and safety valve arrangement of a fuel feeding system, the arrangement being of the kind according to the preamble of claim 1.

In known pressure injection systems or rail systems for feeding fuel in internal combustion engines, there is the need for different kinds of valve arrangements. Especially when heavy oil or the like is used as fuel, the viscosity of the fuel has to be decreased sufficiently, before the engine is started, to make it possible for the fuel to be injected into a cylinder. This fuel viscosity reduction is achieved in practice by circulating the fuel through the fuel feeding system so that it is warmed up. Known common rail systems also require a valve function to limit the pressures used and a valve for depressurizing the system when stopping the engine or in an emergency situation. The implementation of these functions normally requires three different valve functions each requiring a separate valve.

US-A-5537980 discloses a high pressure fuel injection system which aims to prevent leakage of fuel from fuel injection valves by dropping the pressure of a fuel accumulator. However a pressure relief valve only opens when the engine is still running.

The aim of the invention is to provide a new valve arrangement which is advantageous as to its construction and by means of which the valve functions referred to above can, at least partly, be integrated into a common construction to obtain a compact entity which is advantageous as to its costs. A further aim is for the valve arrangement to be applied in fuel feeding systems utilizing, especially, heavy fuel oil as the fuel.

The aims of the invention can be achieved by the control and safety valve arrangement of claim 1 and the other claims.

According to the present invention, a control and safety valve arrangement of the kind referred to is characterised in that the valve means include two valves arranged functionally in successive order in a common valve unit comprising a valve chamber through which said return flow line is led, the first valve in the flow direction being controlled by said first control arrangement under the influence of a separate control pressure and being located in said valve chamber, and the second valve in the flow direction being controlled by said second control arrangement. The second valve may serve as a pressure restricting valve which acts independently of the operation of the first valve. Such an arrangement makes it possible to implement different valve functions required in common rail systems by making use of common structures.

If the first control arrangement comprises a precontrol valve, preferably a solenoid valve, for controlling the control pressure, the control pressure can be connected and disconnected quickly and precisely according to need. In practice the control pressure can with advantage be hydraulically implemented, the first control arrangement being, for instance, part of a servo oil circuit of the engine which is generally needed in any event to control the operation of fuel injection valves.

The second control arrangement may simply comprise a valve spring, the spring force and prestress of which determine the valve opening pressure in accordance with the limit value.

Suitably a valve member of the first valve is arranged to divide the valve chamber into two parts isolated from each other so that the first chamber part forms a part of said return flow line and the second chamber part is connected to the pressure to be controlled by means of the precontrol valve. The valve member of the first valve may in addition comprise a chamber, which can be connected either to the pressure accumulator unit or to the first chamber part. In this case a valve member of the second valve, a seat surface for the second valve and a valve spring of the second valve can be located in the chamber in the valve member so that normally it closes the connection from the pressure accumulator unit through the first chamber part into the fuel tank.

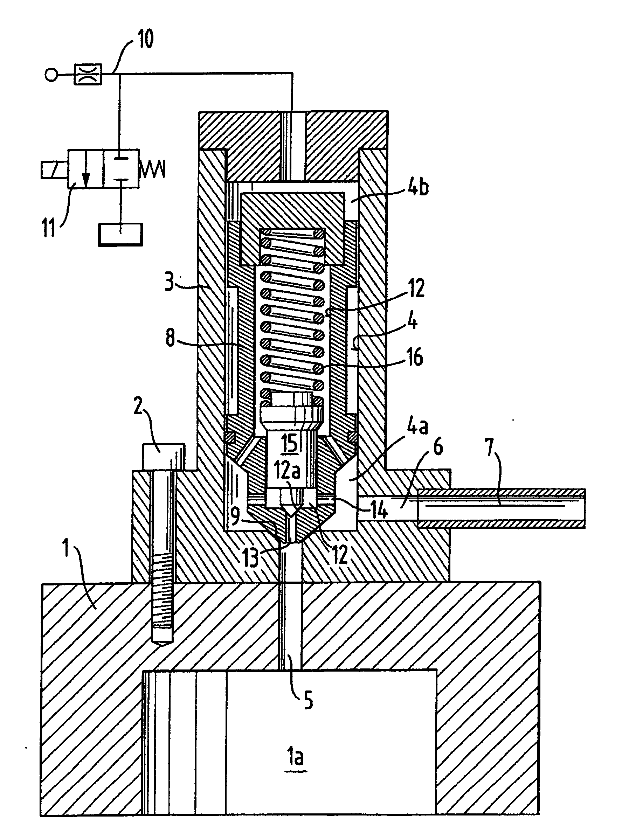

An embodiment of the invention will now be described, by way of example only, with particular reference to the accompanying drawing the sole figure of which is a sectional view of a valve arrangement according to the invention.

In the figure reference numeral 1 indicates a common pressure accumulator unit included in a fuel feeding system of an engine and from which fuel is injected, in a manner known as such, into at least two cylinders of the engine (not shown). A valve unit 3 including a valve chamber 4 is fixed, by means of screw bolts 2, to the common pressure accumulator unit 1. A pressure space 1a in the pressure accumulator unit 1 is connected by means of a duct 5 to the valve chamber 4 and, from the valve chamber 4, by a duct 6 and a pipe 7 to a fuel tank (not shown). In addition to this return flow line, the pressure space 1a is naturally in connection with the fuel tank through a fuel feeding line and pumping means in association therewith etc. Since, however, these parts do not relate to the present invention, they have not been shown in the drawings and have not been described in detail. When the engine is running, the pressure in the pressure space 1a is typically, for instance, in the order of 1200 bar.

The valve chamber 4 provides a valve seat 9 for a valve member 8 of a first valve housed within the valve chamber 4.

The valve member 8 divides the valve chamber 4 into two parts 4a and 4b which are isolated from each other. In order to control the valve, the chamber part 4b is connected to a servo oil circuit 10 of the engine, whereby the control pressure normally closing the valve is typically in the order of 100 bar. Opening and closing of the valve takes place by means of a precontrol valve 11, preferably a solenoid valve. Depending on the operating position of the control valve 11, either the chamber part 4b is under the control pressure, whereby the valve member 8 is in the closed position shown in the figure and the valve is thus closed, or there is no pressure in the chamber part 4b, whereby the valve is open and the pressure space 1a is in connection through the chamber part 4a with the pipe 7 and thus with the fuel tank (not shown).

The valve member 8 includes a chamber 12 which can be connected via a duct 13 to the duct 5 and through to the pressure space la. The chamber 12 is also connected via a duct 14 to the chamber part 4a and via the duct 6 and the pipe 7 to the fuel tank. Another valve is located in the chamber 12 and has a valve member 15 which is urged by means of a valve spring 16 against a valve seat 12a provided by the chamber 12. This valve controls the closing of the duct 13 and thus the closing of the connection of the pressure space 1a to the fuel tank when the influence of the pressure prevailing in the pressure space 1a on the valve member 15 is smaller than the closing force of the valve spring 16 acting on it. This valve thereby serves as a pressure limiting valve. The spring force of the valve spring 16 is selected so that it is smaller than the force of the pressure normally prevailing in the chamber part 4b and acting on the valve member 8, so that the second valve is opened before the first valve. As is apparent from the figure, each valve may open independently of one another.

On the basis of the above it is possible to limit the pressure in the pressure space 1a by means of the valve spring 16. In addition the pressure space 1a can be connected at any time to the fuel tank of the engine by means of the precontrol valve 11, i.a. in order to circulate fuel for preheating thereof before starting of the engine and in order to depressurize the high pressure fuel system in an emergency situation very quickly or in a normal situation in connection with stopping of the engine.

In the embodiment described two flow lines with different diameter are available, whereby for circulation of fuel and for those cases when the fuel feeding system must quickly be depressurized the flow line with the larger diameter may with advantage be utilized.

The invention is not restricted to the embodiments shown but several modifications are feasible within the scope of the ensuing claims.

## Claims

1. A control and safety valve arrangement in a fuel feeding system of an internal combustion engine, especially a large diesel engine, in which fuel is pumped from a fuel tank at least to one common pressure accumulator unit (1) and is fed therefrom under high pressure for injection into at least two cylinders of the engine, wherein the pressure accumulator unit (1,1a) is connected to the fuel tank by a separate return flow line (5,6,7), which is provided with valve means having separate first and second control arrangements operationally independent of each other so'that the pressure accumulator unit (1) can be connected to the fuel tank by means of the first control arrangement when necessary and in addition by means of the second control arrangement if the pressure in the pressure accumulator unit (1) exceeds a certain selected limit value, **characterised in that** the valve means include two valves arranged functionally in successive order in a common valve unit (3) comprising a valve member (4) through which said return flow line (5, 6, 7) is led, the first valve in the flow direction being controlled by said first control arrangement under the influence of a separate control pressure and being located in said valve chamber (4), and the second valve in the flow direction being controlled by said second control arrangement.

2. A valve arrangement according to claim 1, **characterized in that** said first control arrangement comprises a precontrol valve (11), preferably a solenoid valve, for controlling said control pressure.

3. A valve arrangement according to claim 1 or 2, **characterized in that** said control pressure is hydraulically implemented, preferably as a part of a servo oil circuit (10) of the engine.

4. A valve arrangement according to any one of the preceding claims, **characterized in that** said second control arrangement comprises a valve spring (16, 20), having a spring force and prestress of which determine the opening pressure in accordance with said limit value.

5. A valve arrangement according to any one of the preceding claims, **characterized in that** the second valve in the flow direction is controlled by said second control arrangement so that its opening force is smaller than that of the said first valve.

6. A valve arrangement according to any one of the preceding claims, **characterized in that** a valve member (8) of the first valve is arranged to divide said valve chamber (4) into two parts (4a,4b) isolated from each other so that the first chamber part (4a) forms a part of said return flow line (5,6,7) and the second chamber part (4b) is connected to the pressure to be controlled by means of the first control arrangement.

7. A valve arrangement according to claim 6 when dependent on any one of claims 1 to 3, **characterized in that** the valve member (8) of the first valve comprises a chamber (12), which can be connected on the one hand to the pressure accumulator unit (1,1a) and on the other hand to said first chamber part (4a), and **in that** a valve member (15) of the second valve, a seat surface (12a) of the second valve and a valve spring (16) are located in said chamber (12) in the valve member (8) of the first valve so that normally it closes the connection from the pressure accumulator unit (1,1a) through said first chamber part (4a) into the fuel tank.

## Patentansprüche

1. Steuerungs- und Sicherheitsventilanordnung in einem, Kraftstoffzufuhrsystem eines Verbrennungsmotors, insbesondere eines großen Dieselmotors, in dem Kraftstoff von einem Kraftstofftank zu mindestens einer gemeinsamen Drucksammelbehältereinheit (1) gepumpt und von dort aus unter hohem Druck zur Einspritzung in mindestens zwei Zylinder des Motors zugeführt wird, wobei die Drucksammrilbehältereinheit (1, 1a) mit dem Kraftstofftank durch eine separate Rückströmungsleitung (5, 6, 7) verbunden ist, die mit Ventilmitteln mit einer ersten und einer zweiten Steuerungsanordnung ausgestattet ist, die unabhängig voneinander arbeiten, so daß die Drucksammelbehältereinheit (1) mit dem Kraftstofftank bei Bedarf mittels der ersten Steuerungsanordnung und zusätzlich mittels der zweiten Steuerungsanordnung verbunden sein kann, wenn der Druck in der Drucksammelbehältereinheit (1) einen bestimmten ausgewählten Grenzwert überschreitet, **dadurch gekennzeichnet, daß** die Ventilmittel zwei Ventile beinhalten, die betriebswirksam hintereinander in einer gemeinsamen Ventileinheit (3), die eine ventilkammer (4) umfaßt, durch die die Rückströmungsleitung (5, 6, 7) verläuft, angeordnet sind, wobei das erste Ventil, das sich in der Ventilkammer (4) befindet, in der Strömungsrichtung durch die erste Steuerungsanordnung unter dem Einfluß eines separaten Steuerungsdrücks und das zweite Ventil in der Strömungsrichtung durch die zweite Steuerungsanordnung gesteuert wird.

2. Ventilanordnung nach Anspruch 1, **dadurch gekennzeichnet, daß** die erste Steuerungsanordnung ein Vorsteuerungsventil (11), vorzugsweise ein Magnetventil, umfaßt, um den Steuerungsdruck zu steuern.

3. Ventilanordnung nach Anspruch 1 oder 2, **dadurch gekennzeichnet, daß** der Steuerungsdruck hydraulisch realisiert wird, vorzugsweise als ein Teil eines Servoölkreislaufs (10) des Motors.

4. Ventilanordnung nach einem der vorstehend aufgeführten Ansprüche, **dadurch gekennzeichnet, daß** die zweite Steuerungsanordnung eine Ventilfeder (16, 20) mit einer Federkraft und einer Vorspannung umfaßt, durch die der Öffnungsdruck in Übereinstimmung mit dem Grenzwert bestimmt wird.

5. Ventilanordnung nach einem der vorstehend aufgeführten Ansprüche, **dadurch gekennzeichnet, daß** das zweite Ventil in der Strömungsrichtung durch die zweite Steuerungsanordnung so gesteuert wird, daß seine Öffnungskraft geringer als diejenige des ersten Ventils ist.

6. Ventilanordnung nach einem der vorstehend aufgeführten Ansprüche, **dadurch gekennzeichnet, daß** ein Ventilelement (8) des ersten Ventils vorgesehen ist, um die Ventilkammer (4) in zwei voneinander getrennte Teile (4a, 4b) so zu unterteilen, daß der erste Kammerteil (4a) einen Teil der Rückströmungsleitung (5, 6, 7) bildet und der zweite Kammerteil (4b) mittels der ersten Steuerungsanordnung mit dem zu steuernden Druck verbunden ist.

7. Ventilanordnung nach Anspruch 6, soweit von einem der Ansprüche 1 bis 3 abhängig, **dadurch gekennzeichnet, daß** das Ventilelement (8) des ersten Ventils eine Kammer (12) umfaßt, die einerseits mit der Drucksammelbehältereinheit (1, 1a) und andererseits mit dem ersten Kammerteil (4a) verbunden sein kann, und daß sich ein Ventilelement (15) des zweiten Ventils, eine Sitzfläche (12a) des zweiten Ventils und eine Ventilfeder (16) in der Kammer (12) im Ventilelement (8) des ersten Ventils befinden, so daß dieses normalerweise die von der Drucksammelbehältereinheit (1, 1a) aus durch den ersten Kammerteil (4a) in den Kraftstofftank hinein verlaufende Verbindung schließt.

## Revendications

1. Agencement de soupape de sécurité et de régulation dans un système d'alimentation de carburant d'un moteur à combustion interne, spécialement un gros moteur diesel, dans lequel le carburant est pompé d'un réservoir de carburant à au moins une unité commune d'accumulateur de pression (1) et est alimenté à partir de celle-ci sous haute pression en vue de l'injection dans au moins deux cylindres du moteur, dans lequel l'unité d'accumulateur de pression (1, 1a) est connectée au réservoir de carburant par une canalisation de retour séparée (5, 6, 7), qui est pourvue d'un moyen de soupape ayant des premier et deuxième agencements de commande séparés, indépendants l'un de l'autre en fonctionnement, de telle manière que l'unité d'accumulateur de pression (1) peut être connectée au réservoir de carburant au moyen du premier agencement de commande quand cela est nécessaire et en outre au moyen du deuxième agencement de commande si la pression dans l'unité d'accumulateur de pression (1) dépasse une certaine valeur limite sélectionnée, **caractérisé en ce que** le moyen de soupape comprend deux soupapes agencées pour être en fonctionnement dans un ordre successif dans une unité de soupape commune (3) comprenant une chambre de soupape (4) à travers laquelle ladite canalisation de retour d'écoulement (5, 6, 7) est disposée, la première soupape dans la direction de l'écoulement étant commandée par ledit premier agencement de commande sous l'influence d'une pression de commande séparée et étant située dans ladite chambre de soupape (4), et la deuxième soupape dans la direction de l'écoulement étant commandée par ledit deuxième agencement de commande.

2. Agencement de soupape selon la revendication 1, **caractérisé en ce que** ledit premier agencement de commande comprend une soupape de pré-commande (11), préférablement une électrovanne, pour commander ladite pression de commande.

3. Agencement de soupape selon la revendication 1 ou 2, **caractérisé en ce que** ladite pression de commande est mise en oeuvre hydrauliquement, préférablement en tant que partie d'un circuit d'huile de servo (10) du moteur.

4. Agencement de soupape selon l'une quelconque des revendications précédentes, **caractérisé en ce que** ledit deuxième agencement de commande comprend un ressort de soupape (16, 20) exerçant une force de ressort et dont la précharge détermine la pression d'ouverture conformément à ladite valeur limite.

5. Agencement de soupape selon l'une quelconque des revendications précédentes, **caractérisé en ce que** ladite deuxième soupape dans la direction de l'écoulement est commandée par ledit deuxième agencement de commande de telle manière que sa force d'ouverture est plus petite que celle de ladite première soupape.

6. Agencement de soupape selon l'une quelconque des revendications précédentes, **caractérisé en ce qu'**un élément de soupape (8) de la première soupape est agencé de manière à diviser ladite chambre de soupape (4) en deux parties (4a, 4b) isolée l'une de l'autre, de telle manière que la première partie de la chambre (4a) fait partie de ladite canalisation de retour (5, 6, 7) et que la deuxième partie de la chambre (4b) est connectée à la pression devant être contrôlée au moyen du premier agencement de commande.

7. Agencement de soupape selon la revendication 6 quand elle est dépendante de l'une quelconque des revendications 1 à 3, **caractérisé en ce que** l'élément de soupape (8) de la première soupape comprend une chambre (12), qui peut être connectée d'un côté à l'unité d'accumulateur de pression (1, 1a) et d'un autre côté à ladite première partie de la chambre (4a), et **en ce qu'**un élément de soupape (15) de la deuxième soupape, une surface de siège (12a) de la deuxième soupape et un ressort de soupape (16) sont situés dans ladite chambre (12) dans l'élément de soupape (8) de la première soupape, de manière à ce que normalement elle ferme la connexion allant de l'unité d'accumulateur de pression (1, 1a) à travers ladite première partie de la chambre (4a) et dans le réservoir de carburant.
